(19) Europäisches Patentamt
European Patent Office
Office européen des brevets

(11) Publication number: **0 390 451 A2**

(12) **EUROPEAN PATENT APPLICATION**

(21) Application number: 90303165.6

(51) Int. Cl.⁵: C08L 23/02

(22) Date of filing: 23.03.90

(30) Priority: 28.03.89 US 329465

(43) Date of publication of application: 03.10.90 Bulletin 90/40

(84) Designated Contracting States: BE DE FR GB IT NL

(71) Applicant: EXXON CHEMICAL PATENTS INC.
200 Park Avenue
Florham Park New Jersey 07932(US)

(72) Inventor: Lin, Yn-Hwang
14911 Cobre Valley
Houston, Texas 77062(US)

(74) Representative: Veldhuizen, Albert Dirk Willem et al
Exxon Chemical Limited European Patents and Licences Exxon Chemical Technology Centre P.O. Box 1
Abingdon Oxfordshire OX13 6BB(GB)

(54) **Diene modified polyolefin products.**

(57) There is disclosed a polyolefin product comprising a free radically initiated graft of (a) a diene modified polypropylene comprising a random copolymer of propylene and from 0.01 to 10 mole percent of a non-conjugated diolefin and (b) a blend polyolefin selected from (1) polyethylenes, (2) diene modified low density polyethylene, (3) ethylene-propylene rubbers and (4) diene modified ethylene-propylene rubbers. There are also disclosed impact resistant polypropylene and compatibilized thermoplastic polyolefin comprising a matrix phase comprising the diene modified polypropylene, a disperse phase comprising the blend polyolefin, and the graft copolymer present as a compatibilizer in the blend. The graft copolymer is prepared by melt blending the diene modified polypropylene and the blend polyolefin at conditions effective to induce free radical initiation of the grafting.

FIG.1

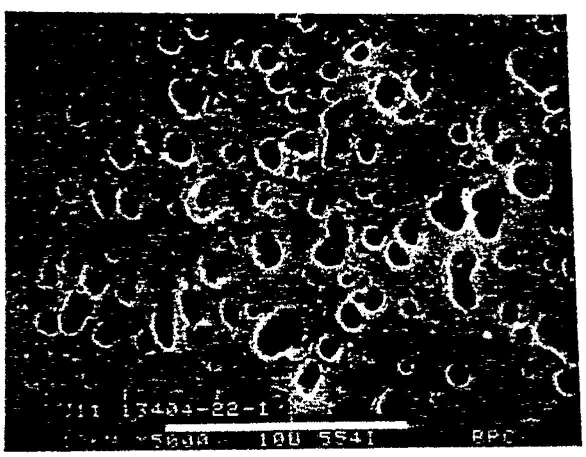

EP 0 390 451 A2

Xerox Copy Centre

# DIENE MODIFIED POLYOLEFIN PRODUCTS

The present invention relates to polymer products made from diene modified polypropylene and particularly to graft copolymers having high impact resistance and/or which are suitable for use as a compatibalizer in polypropylene blends.

## Background of the Invention

U. S. Patents Re. 30,405; Re. 31,518; and Re 32,028 all to Fischer describe reprocessable polyolefin blends stated to exhibit good physical properties. The blends are obtained by blending a partially cured monoolefin copolymer rubber, such as EPM or EPDM rubber, with a polyolefin resin such as polypropylene or polyethylene.

U. S. Patent 4,687,810 to Coran describes a rubber blend produced by masticating a mixture of monoolefin copolymer rubber and high diene hydrocarbon rubber while dynamically vulcanizing the monoolefin copolymer rubber. The blend is then further treated to vulcanize the high-diene hydrocarbon rubber portion. The resulting vulcanized blend is stated to have improved properties.

U. S. Patent 4,366,296 to Kitagawa, et al. describes a random copolymer of ethylene, propylene or 4-methyl-1-pentene with a branched 1,4-diene.

## Summary of the Invention

The present invention is a polymer product obtained by reacting, under free radical conditions, diene-modified polyolefin and a blend polyolefin. Broadly, the polymer product is a free-radically initiated graft of (A) a diene modified polypropylene which can be (i) a random copolymer of propylene and from 0.01 to 10 mole percent of a non-conjugated diolefin, or (ii) a diene modified random copolymer comprising 0.1-10 mole percent of a non-conjugated diolefin, 80 to 99.8 mole percent propylene and 0.1 to 10 mole percent of another $\alpha$-olefin such as ethylene, butene-1, pentene-1 and the like, and (B) a blend polyolefin selected from (i) polyethylenes such as low density polyethylene, linear low density polyethylene, high density polyethylene and the like, (ii) modified polyethylenes, such as, for example, diene modified linear low density polyethylene, (iii) ethylene-propylene rubbers and (iv) diene modified ethylene-propylene rubbers. The graft copolymer may be prepared by blending the diene modified polypropylene and the blend polyolefin. The diene modified polypropylene and the blend polyolefin are grafted or cross-linked together by free radical initiation, such as, for example, thermally, in the presence of peroxide catalysts and/or by gamma ray irradiation. The resulting polyolefin product may be used in molding high impact resistant articles, such as battery cases, automobile bumpers and the like, and also in blends of polypropylene with the polyolefin product as a compatibilizer. As used herein, a compatibilizer reduces the interfacial tension between two different polyolefin phases such as, for example, a polypropylene phase and a polyethylene phase, and stabilizes (minimizes) the particle size of the dispersed phase. As a result, the impact resistance of the blend material can be improved by the presence of the compatibilizer.

In another aspect, the invention provides a compatibilized polypropylene which has a polypropylene matrix phase, an ethylene-propylene disperse phase and includes the polymer product of the present invention as a compatibilizer. The polymer product comprises a free-radically grafted blend of diene modified polypropylene and the ethylene-propylene rubber or, more preferably, diene-modified ethylen-propylene rubber.

## Detailed Description of the Preferred Embodiments

The present invention is a polyolefin product comprising a graft copolymer prepared by free radical initiated grafting between a diene modified polypropylene and a blend polyolefin. The diene modified polypropylene (DMPP) is a random copolymer of propylene and from 0.01 to 10 mole percent of a non-conjugated diolefin, and preferably from 0.1 to 5 mole percent of the non-conjugated diolefin. The DMPP can also be a terpolymer comprising 0.1 to 10 mole percent of another olefin such as ethylene, 1-butene, 1-pentene and the like. The non-conjugated diolefin is a primary linear diolefin, a branched diolefin, or a cyclic diolefin. Exemplary linear diolefins include 1,4-hexadiene, 1,5-octadiene, 1,6-decadiene, 1,9-octadecadiene,

and the like. Exemplary branched non-conjugated dienes include branched 1,4 dienes of the formula:

$$\begin{array}{l} CH_2 = CH - CH_2 - \underset{\displaystyle R^2}{\underset{|}{C}} = \underset{\displaystyle R^3}{\underset{|}{C}} - R^1 \end{array}$$

wherein $R^1$ is an alkyl group of a maximum of eight carbon atoms, and each of $R^2$ and $R^3$ is hydrogen or an alkyl of a maximum of 8 carbon atoms, exclusive of the case where both $R^2$ and $R^3$ are both hydrogen. Exemplary cyclic diolefins include norbornadiene, dicyclopentadiene, propenylnorbornene, methylenenorbornene, ethylidenenorbornene, and the like. Such diene modified polypropylenes and methods for their preparation are known in the art from, for example, U. S. Patent 4,366,296 which is incorporated herein by reference. The blend polyolefin component of the graft copolymer of the present invention is selected from polyethylenes and ethylene-propylene rubbers and most preferably diene modified polyethylenes (DMPE) and diene modified ethylene-propylene rubbers (EPDM). In the case of the polyethylenes (PE), the blend polyolefin component may be a high density polyethylene (also known as linear polyethylene), low density polyethylene (also known as branched polyethylene), linear low density polyethylene or the like. Such polyethylenes and methods for their manufacture are well known in the art.

High density polyethylene (HDPE) typically has a density in the range of 0.940-0.965 $g/cm^3$, and is usually a highly crystalline or largely linear homopolymer of ethylene. Low density polyethylene (LDPE) typically has a density in the range of 0.890-0.940 $g/cm^3$, and is usually a branched and generally amorphous homopolymer of ethylene, or a copolymer of ethylene and a relatively minor proportion of a copolymerizable vinyl monomer. Linear low density polyethylene (LLPDE) is prepared using a coordination catalyst to obtain a linear molecular configuration similar to that of HDPE, but includes a $C_4$-$C_{12}$ alphaolefin copolymer in sufficient quantities, typically 0 - 20 weight percent, to reduce the density into the LDPE range, e.g. 0.900 - 0.925 $g/cm^3$. These PE's may also be diene-modified PE (DMPE) containing 0.01 to 10 weight percent of the aforementioned non-conjugated diolefin.

The ethylene-propylene rubbers are typified by saturated ethylene-propylene copolymer rubber (EPM) and unsaturated ethylene-propylene non-conjugated diene terpolymer rubber (EPDM). The ethylene-propylene rubbers are usually amorphous, random, elastomeric copolymers of two or more monoolefins, with (EPDM) or without (EPM) at least one copolymerizable polyene. Two monoolefins are typical, e.g. ethylene and propylene, but three or more may be used. In the case of EPM, weight ratios of ethylene:propylene of from 20:80 to 80:20 are typical. Other alphaolefins which have been used in ethylene-propylene rubbers include 1-butene, 1-pentene, 1-hexene, 4-methyl-1-pentene, 5-methyl-1-hexene, 4-ethyl-1-hexene and the like. While the ethylene-propylene copolymer may be a saturated material, it is preferred to use EPDM containing 30 to 80 weight percent ethylene, 10 to 69.9 weight percent propylene and 0.1 to 10 weight of the primary non-conjugated diolefin to confer unsaturation on the rubber. Conjugated dienes such as butadiene or isoprene may be used, but non-conjugated dienes, including linear dienes, branched dienes and cyclic dienes are preferred.

The relative proportions of the DMPP and the blend polyolefin used to prepare the graft copolymer of the present invention may vary from a weight ratio of DMPP:PE/EP of from 10:90 to 90:10, although the particular proportion will depend in large part on the properties of the respective graft components and the desired end use application. For impact resistant polypropylenes, the weight ratio of DMPP:PE/EP is preferably from 85:15 to 60:40, and especially 85:15 to 75:25. For compatibalized thermoplastic polyolefin (TPO) blends, the weight ratio of DMPP:PE/EP is preferably from 70:30 to 30:70, and especially 70:30 to 50:50.

The DMPP and the EP or PE are grafted by blending the components together and subjecting the blend to conditions effective to induce free radical formation. The blend components are melt blended, for example, using conventional melt blending equipment such as roll mills, Bandbury mixers, extruders and the like. Free radical initiation of the grafting is effected by elevating the temperature of the melt blend, and preferably by exposing the melt blend to gamma ray irradiation or melt blending in the presence of peroxides. suitable grafting temperatures are 150°-300°C, preferably 175°-250°C, for a period of 1-20 minutes, preferably 5-10 minutes. Effective amounts of the peroxide catalysts are from about 10 to about 1000 ppm of the blend, preferably 50 to 200 ppm. Suitable peroxide catalysts include, for example, diacetyl-peroxide; dibenzoylperoxide; bis-2,4-dichlorobenzoylperoxide; di-t-butylperoxide; dicumylperoxide; t-butylperbenzoate; t-butylcumyl-peroxide; 2,5-bis(t-butylperoxy)-2,5-dimethylhexane; 2,5-bis-(t-butylperoxy)-2,5- dimethylhexyne; 3,4,4′,4′-tetra-(t-butylperoxy)-2,2-dicyclohexylpropane; 1,4-bis-(t-butylperoxy-isopropyl)benzene; 1, 1-bis-(t-butylperoxy)-3,3,5-trimethylcyclohexane; lauroyl peroxide; succinic acid peroxide; cyclohexanone peroxide; t-butylperacetate; butylhydroperoxide, and the like. Gamma ray irradiation is generally effective at levels of 0.1-10 Mrad, and levels of 2-5 Mrad are preferred.

The resulting graft copolymer is a graft of the diene modified polypropylene and the PE or EP, and depending on the extent of grafting, may also include ungrafted DMPP and/or PE or EP. Depending upon the extent of grafting, the polyolefin product of the invention generally includes a matrix phase of the diene modified polypropylene, a dispersed phase of the blend polyolefin and the graft copolymer at the interface of the matrix and dispersed phases. The grafting of the DMPP, especially in the presence of peroxide and gamma rays, is quite surprising because the degradation of unmodified polypropylene is generally so severe that any grafting between the degraded polypropylene and the PE or EP is not very effective in improving physical properties, particularly impact resistance. In contrast, the graft copolymer of the present invention is novel in that the grafted DMPP component experiences little or no degradation, apparently because of a stabilizing effect from the pendant C = C moieties.

## Brief Description of the Figures

Fig. 1 is a scanning electron micrograph of a thermally grafted blend of diene modified polypropylene and EPDM according to the present invention as described in Example A1, and shows a large number of submicron particles and interfacial structure indicative of interfacial mixing and bonding.

Fig. 2 is a scanning electron micrograph of a peroxide grafted blend of diene modified polyethylene and EPDM according to the present invention as described in Example A2, and shows a large of number of submicron particles and a great deal of interfacial structure, indicative of interfacial mixing and bonding.

Fig. 3 is a scanning electron micrograph of a non-diene modified polypropylene/EPDM blend thermally treated in the presence of peroxide as described in Comparative Example B1, and shows an absence of submicron particles and interfacial structure, indicative of a lack of interfacial mixing and bonding.

Fig. 4 is a scanning electron micrograph of an unmodified polypropylene/EPDM blend thermally treated as described in Comparative Example B2, and shows an absence of submicron particles and interfacial structure, indicative of a lack of interfacial mixing and bonding.

## Example A1

A polyolefin product was prepared according to the present invention using thermally initiated grafting. Eighty parts by weight of a diene modified polypropylene were blended with 20 parts by weight EPDM. The diene modified polypropylene contained 0.75 mole percent 1,4-hexadiene, and had a melt flow value of 3.6 dg/min. The EPDM contained 5 weight percent 5-ethylidene-2-norbornene, 70 weight percent ethylene, and 25 weight percent propylene, and was obtained under the trade designation V7000. The EPDM had a Mooney viscosity of 55. The blend was prepared on a Brabender by melt blending at 200° C for five minutes. The molecular weight distribution of the resulting product was determined using gel permeation chromatographic characterization techniques. The product had a weight average molecular weight of 256,000, and a $M_w/M_n$ ratio of 4.3. The polyolefin product was evaluated in a flex test per ASTM D-790 and had a tangent modulus of 120,000 psi. A notched Izod test was performed on the material of the product according to ASTM D-250 and no break of the specimen was observed. A scanning electron micrograph was obtained on a sample of the graft copolymer and is reproduced in Fig. 1. Example A1 is summarized in the Table below.

## Example A2

The materials and procedures of Example A1 were repeated, except that grafting was effected by adding 100 ppm of 2,5-dimethyl-2,5-di(t-butylperoxy) hexane to the blend, mixing at 180° C for three minutes, raising the temperature over four minutes to 210° C and mixing for five minutes. The resulting product had a $M_w$ of 200,000, a $M_w/M_n$ ratio of 3.5, a tangent modulus of 118,000 psi, and the notched Izod sample did not break. Example A2 is summarized in the Table below. The scanning electron micrograph of the graft copolymer of Example A2 is illustrated in Fig. 2

## Comparative Example B1

The procedure of Example A1 was repeated using an unmodified polypropylene with a melt flow value of 4. The resulting blend had a $M_w$ of 190,000, a $M_w/M_n$ ratio of 3.1, a tangent modulus of 90,000 psi and a notched Izod result of 2.5. Comparative Example B1 is summarized in the Table below. The scanning electron micrograph of the Comparative Example B1 blend is seen in Fig 3.

## Comparative Example B2

The procedure of Example A2 was repeated using the unmodified polypropylene described in Comparative Example B1. The resulting blend had a $M_w$ of 99,000, a $M_w/M_n$ ratio of 2.5, a tangent modulus of 84,000 psi and a notched Izod test value of 1.7. The results of Comparative Example B2 are included in the Table below. The scanning electron micrograph of the blend of Comparative Example B2 is seen in Fig. 4.

TABLE

| EXAMPLE: | A1 | A2 | B1 | B2 |
|---|---|---|---|---|
| DMPP[1] (parts by weight) | 80 | 80 | 0 | 0 |
| PP[2] (parts by weight) | 0 | -0- | 80 | 80 |
| EPDM[3] (parts by weight) | 20 | 20 | 20 | 20 |
| Peroxide[4] (ppm) | 0 | 100 | 0 | 100 |
| $M_w$ | 256,000 | 200,000 | 190,000 | 99,000 |
| $M_w$:$M_n$ | 4.3 | 3.5 | 3.1 | 2.5 |
| Tangent Modulus[5] (psi) | 120,000 | 118,000 | 90,000 | 84,000 |
| Notched Izod[6] | No break | No break | 2.5 | 1.7 |
| NOTES FOR TABLE: | | | | |

1. Diene modified polypropylene, 0.75 mole percent 1,4-hexadiene; MFR 3.6.
2. Unmodified polypropylene; MFR 4.
3. Diene modified ethylene-propylene rubber obtained under the trade designation V7000, 5 wt. percent 1,4-hexadiene, 70 wt. percent ethylene, 25 wt. percent propylene; Mooney viscosity = 55.
4. 2,5-Dimethyl-2,5-di(t-butylperoxy)hexane obtained under the trade designation Lupersol.
5. ASTM D-790.
6. ASTM D-250.

It is seen from the foregoing examples that there is a substantial reduction in $M_w$ for the blends with the unmodified polypropylene, whereas the DMPP grafts retain a significantly higher $M_w$ and are not significantly degraded. The polyolefin product of the present invention (Examples Al and A2) has a significantly better impact resistance, even though the tangent modulus is much higher than the Comparative Example B1 and B2 blends. The comparison between the Example A2 graft copolymer and the Comparative Example B1 blend is particularly significant in view of the similar molecular weight distributions. The superiority of the polyolefin product of the present invention, as compared to blends containing polypropylene unmodified with any diene are particularly significant. It is seen in the SEM's of the graft copolymers of Examples A1 and A2 (Fig. 1 and Fig. 2) that there is a great deal of interfacial structure and a high incidence of submicron particles which are absent from the SEM's for the blends of Comparative Examples B1 and B2 prepared without diene modified polypropylene. From the SEM's, it is seen that the morphologies of examples A1 and A2 are very similar (as are their impact properties). In contrast, the morphologies of the Comparative Examples B1 and B2 are not uniform, indicative of degradation of the polypropylene component by the peroxide and/or thermal treatment. In order for the submicron particles in Examples A1 and A2 to survive the molding period, the small particles must be stabilized by the DMPP/EPDN graft copolymer species. Without diene in the polypropylene phase, the Comparative Examples B1 and B2 SEM's show a morphology similar to that of a polypropylene (unmodified by diene) and

EPDM blend without grafting.

The foregoing description of the invention is illustrative and explanatory thereof. Various modifications will occur to those skilled in the art in view of the foregoing description. It is intended that all such variations and modifications which fall within the scope and spirit of the appended claims be embraced thereby.

## Claims

1. A polyolefln product, comprising:
a free-radically grafted blend of:
(a) diene modified polypropylene selected from (i) a random copolymer of from 90 to 99.9 mole percent propylene and from 0.01 to 10 mole percent of a non-conjugated diolefin, and (ii) a random terpolymer of from 80 to 99.8 mole percent propylene, from 0.1 to 10 mole percent of a non-conjugated diolefin and from 0.1 to 10 mole percent of one or more other alpha-olefins; and
(b) a blend polyolefin selected from (i) polyethylenes, (ii) diene-modified polyethylenes, (iii) saturated ethylene-propylene rubbers, and (iv) diene-modified ethylene-propylene rubbers.

2. The product of claim 1, wherein said non-conjugated diolefin is selected from 1,4-hexadiene, 1,5-octadiene, 1,6-decadiene and 1,9-octadecadiene.

3. The product of claim 1, wherein said non-conjugated diolefin is selected from branched 1,4-dienes of the formula:

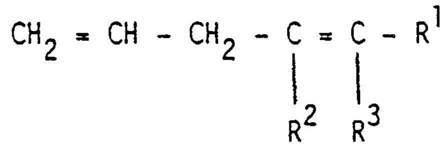

wherein $R^1$ is an alkyl group of up to eight carbon atoms, and each of $R^2$ and $R^3$ is hydrogen or an alkyl of up to eight carbon atoms, and wherein at least one of $R^2$ and $R^3$ is an alkyl group.

4. The product of claim 1, wherein said non-conjugated diolefin is selected from norbornadiene, dicyclopentadiene, propenylnorbornene, methylenenorbornene and ethylidenenorbornene.

5. The product according to any one of the preceding claims wherein said diene modified polypropylene comprises from 0.1 to 5 mole percent of said non-conjugated diolefin.

6. The product according to any one of the preceding claims wherein said product is prepared by blending said diene modified polypropylene and said blend polyolefin and cross-linking said blend thermally, in the presence of peroxide catalysts or by gamma ray irradiation.

7. The product according to any one of the preceding claims which comprises said diene modified polypropylene and said blend polyolefin in A weight ratio of from 10:90 to 90:10.

8. The product of claim 7 comprising an impact-resistant polypropylene wherein said weight ratio of diene modified polypropylene to blend polyolefin is from 85:15 to 60:40.

9. The product of claim 7 comprising a thermoplastic polyolefin wherein said weight ratio of diene modified polypropylene to blend polyolefin is from 70:30 to 30:70.

10. The product according to any one of the preceding claims wherein said diene modified polypropylene comprises 80 to 99.8 mole percent propylene and 0.1 to 10 mole percent of another alpha-olefin.

11. The product according to any one of the preceding claims wherein the blend polyolefin is an ethylene-propylene rubber having a weight ratio of ethylene:propylene of from 20:80 to 80:20.

12. The product according to any one of claims 1 to 10, wherein the blend polyolefin is diene modified ethylene-propylene rubber comprising from 30 to 80 weight percent ethylene, from 10 to 69.9 weight percent propylene and 0.1 to 10 weight percent of non-conjugated diolefin.

13. The product according to any one of claims 1 to 10, wherein said blend polyolefin is an ethylene-propylene-diene terpolymer.

14. The product according to any one of claims 1 to 10, wherein said blend polyolefin is selected from high density polyethylene, low density polyethylene and linear low density polyethylene.

15. The product according to any one of claims 1 to 10, wherein the blend polyolefin is diene modified linear low density polyethylene comprising from 70 to 99.9 weight percent ethylene, from 0.1 to 10 weight percent of non-conjugated diolefin and from 0 to 20 weight percent of $C_4$-$C_{12}$ alphaolefin.

16. A polyolefin composition comprising:

a matrix phase comprising diene modified polypropylene comprising a random copolymer of propylene and from 0.01 to 10 mole percent of a non-conjugated diene;
a disperse phase comprising diene modified polyethylene or diene modified ethylene-propylene rubber; and, as compatibilizing graft copolymer,
a polyolefin product according to any one of claims 1 to 15.

17. A composition according to claim 16 wherein the polyolefin product is a graft copolymer of the same components as constitute the matrix phase and the disperse phase.

18. A composition according to claim 16 or 17, which has impact-resistant properties and is prepared by steps including melt blending said diene modified polypropylene and said diene modified polyethylene or said diene modified ethylene-propylene rubber at cross-linking conditions at a weight ratio of said diene modified polypropylene to said dlene modified polyethylene or ethylene-propylene rubber of from 85:15 to 60:40, more preferably from 85:15 to 75:25.

19. A composition according to claim 16 or 17 which has thermoplastic properties and is prepared by steps including melt blending said diene modified polypropylene and said diene modified polyethylene or said diene modified ethylene-propylene rubber at cross-linking conditions at a weight ratio of said diene modified polypropylene to said diene modified polyethylene or ethylene-propylene rubber of from 70:30 to 30:70, more preferably from 70:30 to 50:50.

20. A composition according to any one of claims 16 to 19, wherein said diene-modified polypropylene comprises 80 to 99.8 mole percent propylene and 0.1 to 10 mole percent of another alpha-olefin.

21. A composition according to any one of claims 16 to 20, wherein said disperse phase includes diene modified polyethylene comprising linear low density polyethylene containing 0.01 to 10 weight percent of a primary non-conjugated diolefin, 0 to 20 weight percent of a $C_4$-$C_{12}$ alphaolefin and 70 to 99.99 weight percent ethylene.

22. A composition according to any one of claims 16 to 21, wherein said disperse phase includes diene modified ethylene-propylene rubber containing 30 to 80 weight percent ethylene, 10 to 69.9 weight percent propylene and 0.1 to 10 weight percent of a primary non-conjugated diolefin.

23. A composition according to any one of claims 18 to 22, wherein said melt blending is at a temperature of from 150° to 300° C for from 1 to 20 minutes, more preferably from 175° to 250° C for from 5 to 10 minutes.

24. A composition according to any one of claims 18 to 23, wherein said melt blending is in the presence of from 10 to 1000 ppm peroxide catalyst, more preferably from 50 to 200 ppm peroxide catalyst.

25. A composition according to any one of claims 18 to 24, wherein said melt blending is in the presence of gamma ray irradiation at a level of from 0.1 to 10 Mrad, more preferably from 2 to 5 Mrad.

26. The use of a polyolefln product according to any one of claims 1 to 15 as a compatibilizer in a polyolefin blend composition comprising a matrix phase polyolefin and a disperse phase polyolefin.

27. The use according to claim 26 wherein the matrix phase polyolefin comprises polypropylene and the disperse phase polyolefin comprises polyethylene or ethylene-propylene copolymer.

FIG.1

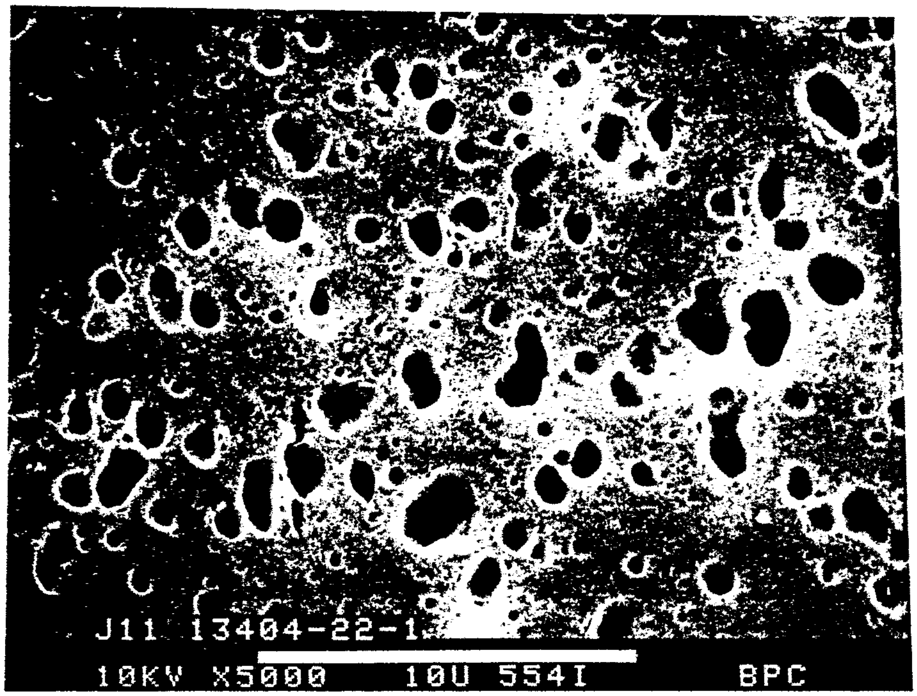
J11 13404-22-1
10KV X5000 10U 554I BPC

FIG.2

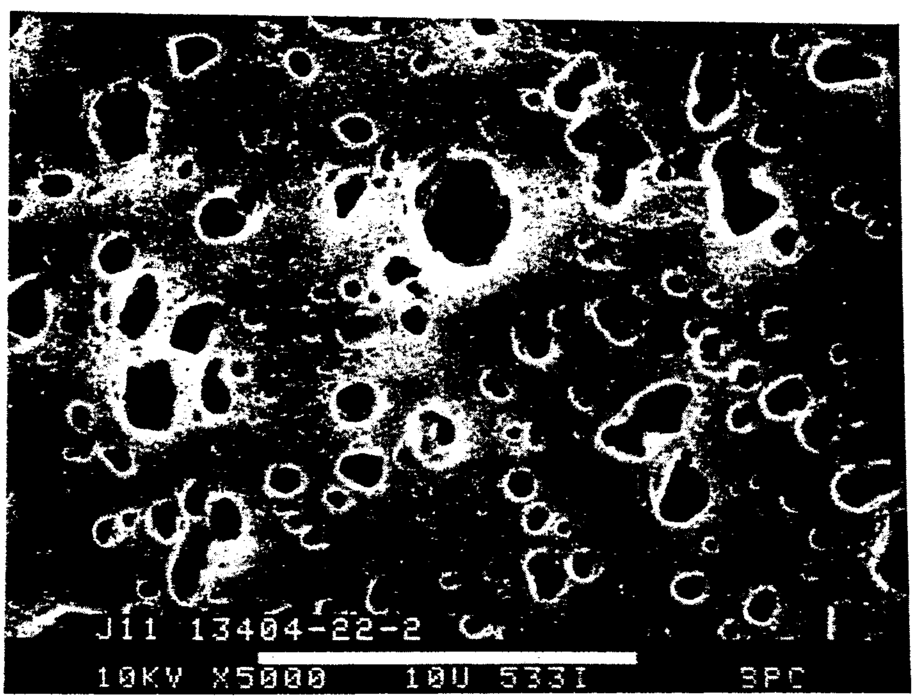
J11 13404-22-2
10KV X5000 10U 533I BPC

FIG.3

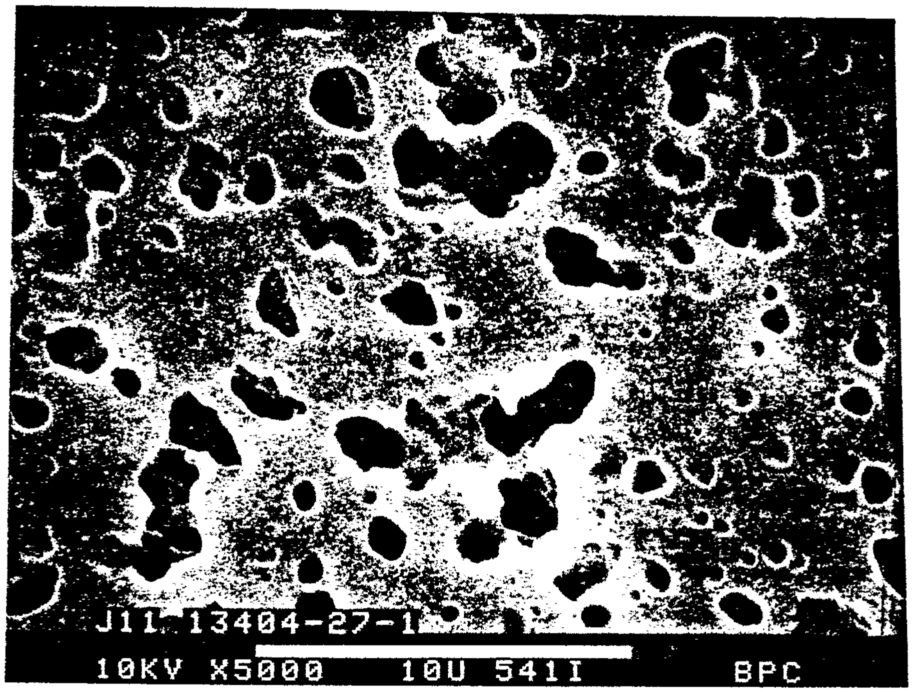
J11 13404-27-1
10KV X5000 10U 541I BPC

FIG.4

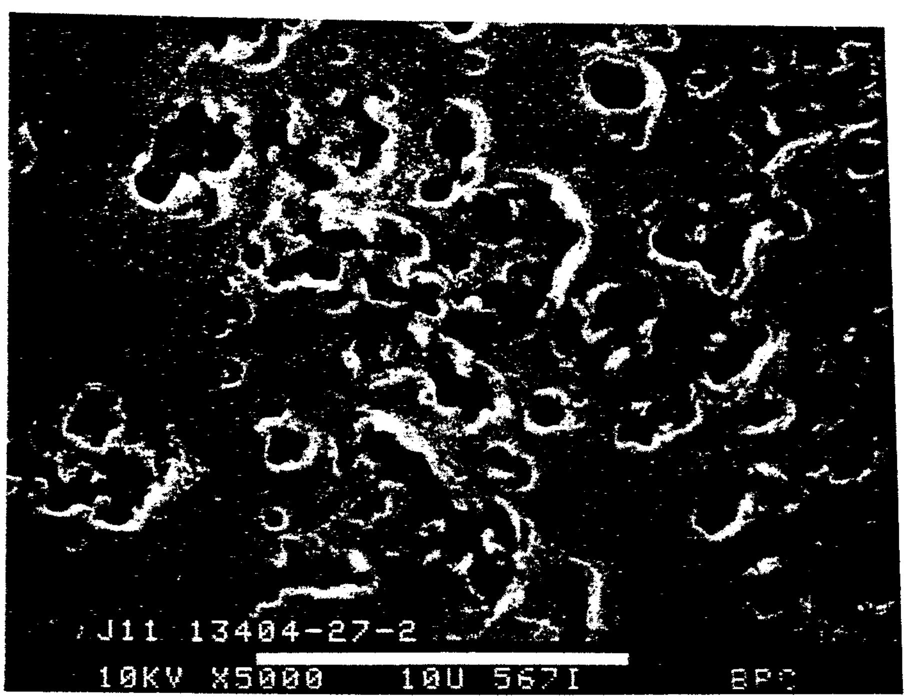
J11 13404-27-2
10KV X5000 10U 567I BPC